Europäisches Patentamt

European Patent Office

Office européen des brevets

(11) Publication number : **0 589 693 A1**

# EUROPEAN PATENT APPLICATION

(21) Application number : **93307534.3**

(51) Int. Cl.⁵ : **C01B 33/34, B01J 29/04**

(22) Date of filing : **23.09.93**

(30) Priority : **25.09.92 US 950526**

(43) Date of publication of application :
**30.03.94 Bulletin 94/13**

(84) Designated Contracting States :
**BE DE FR GB IT NL**

(71) Applicant : **EXXON RESEARCH AND ENGINEERING COMPANY**
**P.O.Box 390, 180 Park Avenue**
**Florham Park, New Jersey 07932-0390 (US)**

(72) Inventor : **Vaughan, David Evan William**
**596 Croton Road**
**Flemington, New Jersey 08822 (US)**
Inventor : **Strohmaier, Karl Gottlieb**
**RD Box 336**
**Port Murray, New Jersey 07865 (US)**

(74) Representative : **Fletcher Watts, Susan J. et al**
**Esso Engineering (Europe) Limited,, Patents and Licenses, Mailpoint 72, Esso House, Ermyn Way**
**Leatherhead, Surrey KT22 8XE (GB)**

(54) **Transition metal substituted gmelinite.**

(57)   Transition metal substituted forms of the mineral gmelinite, and preparation thereof are disclosed. One example, in unhydrated form, being $1.32\ Na_2O : (0.26\ Cr, 0.27\ Fe, 0.47\ Al)_2O_3 : 6\ SiO_2$. Forms in which Fe is absent are also included.

EP 0 589 693 A1

The present invention relates to a synthetic crystalline zeolite which is a transition metal substituted form of the mineral gmelinite.

Gmelinite is a well-known natural zeolite having a structure in which the main feature is a large 12-ring channel, and in this regard it is analogous to zeolites Linde L, mordenite, and cancrinite. All previously reported compositions contain only Si and A1 in framework sites, and have a propensity to form intergrown materials comprising atomic level intergrowths of gmelinite and chabazite. All known natural varieties are thought to be of this type, resulting in a blocked 12-ring channel and poor sorption properties resulting from a variety of possible intergrowths (G.T. Kokotailo and S.L. Lawton, Nature, $\underline{203}$, p. 621, (1964)). The only known gmelinite materials having open 12-ring channels are made with a DABCO polymer filling the channels (L.D. Rollman, NATO ASI Ser. E-60, "Zeolites: Science and Technology", R. Ribeiro et al, p. 109, (1984)).

The present invention provides a synthetic chemical form of the gmelinite zeolite structure type (hereinafter referred to as ECR-26). This structure has been made in a form where the framework T atoms comprise Si, A1, Cr, and Fe. The general formula for this new composition is: 0.8 to 1.3 $M_{2/n}0$: $(Al,Fe,Cr)_2O_3$: 4 to 8 $SiO_2$ in the unhydrated form; e.g.

$$Na_2O: (Al,Fe,Cr)_2O_3: x\ SiO_2: Y\ H_2O$$

where x is between 4 and 8 and Y is from 0 to 8. M is preferably selected from Groups 1A to 8A and Groups 1B and 2B of the Periodic Table.

The atoms of A1 $\geqq$ atoms of (Cr + Fe); $\dfrac{Cr}{Cr+Al+Fe} \geqq 0.05$; and Fe may be absent.

The n-hexane absorption capacity of the synthetic zeolite will generally be greater than about 3 wt.%.

Conventional natural and synthetic gmelinite has a propensity to intergrow with chabazite or related zeolites which block the 12-ring channel of the gmelinite structure, reducing the expected sorption properties to those of an 8-ring or smaller window zeolite. The conventional non-transition metal forms have been reported by several authors and are found abundantly in nature (e.g., along the Bay of Fundy in Nova Scotia).

ECR-26 is an open channel chromiumaluminosilicate gmelinite which requires no organic template for its synthesis. The $Cr^{3+}$ presumably inhibits the formation of phases which normally intergrow with gmelinite, facilitating the growth of the perfect open structure.

Materials of this general structure are important catalysts and sorbents, particularly in hydrocracking and hydroisomerization (mordenite) and aromatization and reforming (zeolite L). Similar important catalyst applications are anticipated for ECR-26, and because the transition metal may be manipulated into non-framework sites, important Fischer-Tropsch applications are possible.

ECR-26 is further characterized by having an X-ray diffraction pattern having the following major lines:

Zeolite L and zeolites having related structures belong to the "L" family of zeolites. This family is characterized by having a 12-ring hexagonal structure with pore dimensions of about 5.5 to 7.2Å. In addition to zeolite L there are also barium zeolites Ba-G and Ba-G,L described by Barrer et al in J. Chem. Soc., 2296 (1964), J. Chem. Soc., 1254 (1972) and J. Chem. Soc., 934 (1974); ZSM-10 (U.S. Pat. No. 3,692,470) may be a DABCO containing member of this group of zeolites. Similarly, zeolite UJ (u.s. Pat. No. 3,298,780) may also be of the zeolite L type. Numerous syntheses of zeolite L have been reviewed in U.S. Patent 4,973,461.

Structures have been proposed for zeolite L (Barrer et al, Zeit. Krist., $\underline{128}$, 352 (1969)) and GL (Baerlocher et al, ibid). If all cation positions in L are filled by monovalent cations, L will have a minimum Si/Al ratio of 1.8 according to Baerlocher et al (Zeit. Krist., v. $\underline{136}$, p. 253 (1972)). ECR-2 has an Si/Al composition in this range (U.S. Patent 4,552,731).

Subsequently, several patents have claimed specific morphology LTL products, such as discs (EP 0096479), large cylindrical crystals (U.S. 4,544,539), and microcrystals (U.S. Pat. 5,064,630), and the subject of morphology variation and control has been discussed generally by Fajula (NATO ASI Series, v. 221B, p. 53 (1990)).

It has been found that zeolite L may be used as a catalyst base in aromatization reactions. U.S. 4,104,320 discloses dehydrocyclization of aliphatic compounds in the presence of hydrogen using a catalyst comprising zeolite L and a group VIII metal, in which the zeolite L is of the formula:

$$M_{2/n}(AlO_2)_9(SiO_2)_{27}$$

(where M is a cation of valence n), but the silica to alumina ratio may vary from 5 to 7.

East German Patent 88,789 discloses dehydrocyclization using a catalyst formed from a zeolite precursor with a silica to alumina ratio of 5 or greater which is dealuminized to give a silica to alumina ratio of up to 70. Zeolite L is mentioned as a precursor.

European Patent Application Publication 40119 discloses a dehydrocyclization process operating at low pressure (1 to 7 bars) or low $H_2$/hydrocarbon ratio using a catalyst comprising platinum on a potassium zeolite L. Belg. Patent 888,365 describes dehydrocyclization using a catalyst comprising platinum, rhenium (incorporated in the form of its carbonyl) and sulphur to give an atomic ratio of sulphur to platinum of 0.05 to 0.6 on a zeolitic crystalline aluminosilicate base such as zeolite L. Belg. Patent 792,608 discloses the treatment of zeolite L for use as a catalyst in isomerization by exchange with ammonium and chromium ions.

## SUMMARY OF THE INVENTION

The present invention is a process to make synthetic nano-sized crystalline zeolites isostructural with LTL, having desirable property advantages because of small crystal sizes, and having the composition, in terms of mole ratios of oxides, in the range: 0.9 to 1.1 $M_{2/n}O$:$(Al,Ga,Fe)_2O_3$:2.5 to 7.0 $SiO_2$:$xH_2O$ wherein M represents at least one exchangeable cation of a metal selected from Group I through VIII of the Periodic Table (Kirk-Othmer Encyclopedia of Chemical Tech., 2nd Edn., V. 8, (1965)), n represents the valence of M, and x may be O or a number from 1 to about 6.

The steps of the process include:

(a) preparing a reaction mixture comprising water, a source of silica, a source of alumina, KOH and up to about 30 mole percent of NaOH based on total moles of KOH and NaOH, ammonia, the reaction mixture having a composition, in terms of mole ratios of oxides, within the following ranges:

| | |
|---|---|
| $M'_2O$:$Al_2O_3$ | 2.5 to 8 |
| $SiO_2$:$Al_2O_3$ | 4 to 20 |
| $H_2O$:$Al_2O_3$ | 80 to 400 |
| $NH_3$:$Al_2O_3$ | 30 to 150 |

where M' is either K or a mixture of K and Na; and Al may be partly or wholly replaced by Ga; and Fe may replace up to about 30% Al or Ga.

(b) maintaining the reaction mixture at between about 70°C and 160°C under autogenous pressure for a sufficient period of time to form a crystalline product in which the crystals have a diameter less than about 30 nanometers.

## BRIEF DESCRIPTION OF THE DRAWINGS

Figure 1 shows the x-ray diffraction patterns for the materials made in examples 1 (top spectrum) through 5 (bottom spectrum).

Figure 2 shows the n-hexane sorption capacity for the zeolites made in examples 1 and 2.

Figure 3 shows an electron micrograph of the nano-crystals of example 1.

Figure 4 shows a thermogravimetric analysis of the zeolites made in examples 1, 2, and 3.

## DESCRIPTION OF THE PREFERRED EMBODIMENT

The present invention is a new way to synthesize LTL in ammonia solvent and co-solvent systems which results in colloid sized crystallites less than 300Å, and in some cases less than 200Å in diameter.

In hydrocarbon processes such small crystals give high diffusion rates, high reactivities, and exceptional resistance to deactivation by pore plugging and surface contamination. The characteristic X-ray diffraction patterns show very broad peaks, and in some cases near - amorphous spectra. However, their IR spectra are fully characteristic of LTL. Such materials may be expected to have superior performance characteristics in such catalytic reactions as aromatization of normal paraffins, reforming, dewaxing, isomerization and oligomerization, as a result of their enhanced accessibility to the micropores. These products show exceptionally high micropore capacity for hydrocarbons, together with unusual mesopore capacity characteristic of agglomerated colloidal particles. Nano-crystals of this type are particularly useful for the preparation of inorganic membranes; the micro crystals filling the pores of the ceramic, usually, alumina, titania or silica, supports, so providing a resilient microporous membrane useful for hydrocarbon, catalytic and separation applications.

At this time the preferred way to make these products is to react a premade silica-alumina gel - typically an amorphous fluid cracking catalyst - having an Si/Al ratio between about 4 and 12 in a potassic ammonia or aqueous ammonia solution. In the absence of ammonia entirely different zeolite products such as chabazite and phillipsite crystallize. The preferred reaction composition is:

3 to $6K_2O$: $(Al,Ga,Fe)_2O_3$: 4 to 15 $SiO_2$: 50 to 150 $NH_3$: 150 to 400 $H_2O$

Materials of this invention may be difficult to filter in a conventional way from the mother liquor of waste products, in which case centrifuge separation and washing is a preferred mode of product separation and purification.

## Example 1

A composition:

3.0 $K_2O$: $Al_2O_3$: 11.4 $SiO_2$: 100 $NH_3$: 240 $H_2O$

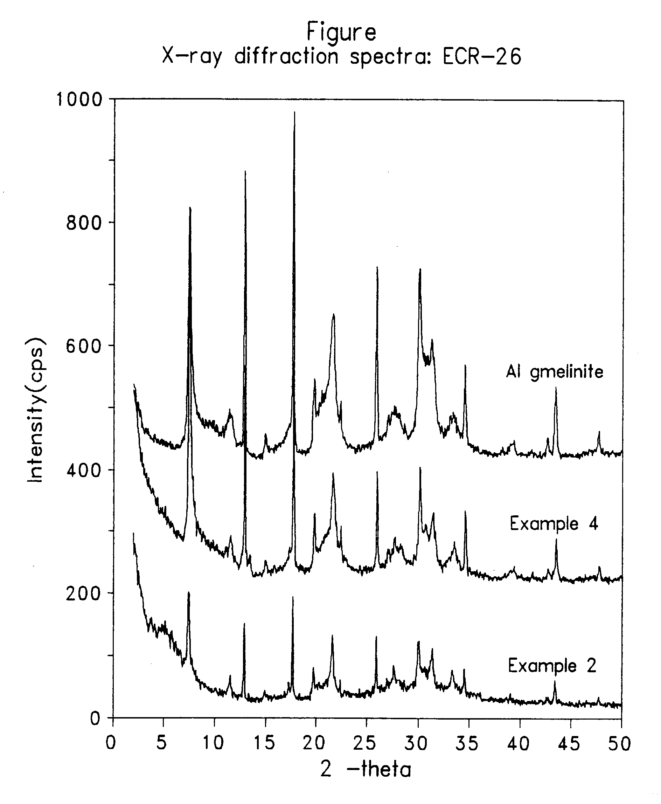

was made by mixing 5 gms high alumina fluid cracking catalyst gel (Davison Chemical Co., Hi-Alumina FCC, having a chemical composition of about 12.5 wt% $Al_2O_3$, 87.5 wt% $SiO_2$) in a solution of 2.40 gms KOH·½$H_2O$ in 40 mls aqueous ammonium hydroxide (29% $NH_3$), and reacting in an autoclave at 100°C. After 12 days reaction the autoclave was cooled, the product filtered, washed and dried at 100°C. X-ray diffraction analysis gave the spectrum shown in Figure 1 which is similar to that for a typical LTL material except that the peaks are very broad, indicating very small crystals. The n-hexane sorption capacity of this sample was 11.2 wt% (25°C, 51 torr) and the sorption isotherm is shown in Figure 2. Transmission Electron microscopy (TEM) showed that the crystallites were less than about 150Å by 200Å, as shown in Figure 3, and clearly showing the 12-ring channels.

Thermogravimetric analysis (Figure 4) showed a $H_2O$ + $NH_3$ capacity of about 15 wt%.

### Example 2

A composition:

3.5 $K_2O$: $Al_2O_3$: 11.4 $SiO_2$: 100 $NH_3$: 240 $H_2O$ was made and reacted as for Example 1, except that 2.8 $KOH\cdot\frac{1}{2}H_2O$ was used in the reaction. The X-ray diffraction pattern after 12 days is shown in Figure 1, and is now showing increased line broadening, almost amorphous like characteristics. The 5 day reaction sample showed a similar spectrum. Thermogravimetric analysis showed a $H_2O$ + $NH_3$ capacity of 19 wt% (Figure 4), and TEM showed crystallites having dimensions 50Å by 80Å. Infrared analyses gave spectra characteristic of zeolite L.

### Example 3

A composition:

4.0 $K_2O$: $Al_2O_3$: 11.4 $SiO_2$: 100 $NH_3$: 240 $H_2O$ was made and reacted as described in Example 1 except that 3.2 gm $KOH\cdot\frac{1}{2}H_2O$ were used in the reaction.

The product X-ray diffraction pattern is shown in Figure 1, and may be described as characteristic of a near amorphous material. However, the TEM examination shows the material to be highly crystalline, but with crystals having very small dimensions (100Å by 150Å). Thermogravimetric analysis showed a $H_2O$ + $NH_3$ capacity of about 23 wt% (Figure 3), and a hexane sorption capacity at 22°C (50 torr) gave 20 wt% sorption. A 25°C n-hexane isotherm showed a distinctive micropore capacity of 8-9 wt%, plus a larger meso-pore sorption, characteristic of small pores between colloidal particles.

### Example 4

A composition:

5 $K_2O$: $Al_2O_3$: 11.4 $SiO_2$: 100 $NH_3$: 240 $H_2O$ was made and reacted in the manner described in Example 1, except that 4 gms of $KOH\cdot H_2O$ were used. The product was essentially similar to that made and described in Example 3 (Figure 1).

### Example 5

A composition:

6 $K_2O$: $Al_2O_3$: 11.4 $SiO_2$: 100 $NH_3$: 240 $H_2O$ was made and reacted as described in Example 1 except that 4.8 gms $KOH\cdot\frac{1}{2}H_2O$ were used. The product was essentially identical to that described in Example 3 (Figure 1).

## Claims

1. A synthetic transition metal aluminosilicate crystalline zeolite having the gmelinite structure and a chemical composition in the unhydrated form:

0.8 to 1.3 $M_{2/n}O$: (Al, Fe, Cr)$_2O_3$: 4 to 8 $SiO_2$

where n is the valence of metal M; the atoms of Al $\geqq$ atoms of (Cr+Fe), $\dfrac{Cr}{Cr + Al + Fe} \geqq 0.05$, and Fe can be absent; having an X-ray diffraction pattern with the following essential lines:

| dÅ | I/Io |
|------|------|
| 11.9 | VS |
| 6.8 | S |
| 5.0 | VS |
| 4.49 | M |
| 4.11 | MS |
| 3.44 | MS |
| 2.97 | MS |
| 2.85 | M |
| 2.59 | M . |

2. The zeolite of claim 1 wherein M is a metal selected from exchangeable cations of groups 1A to 8A and 1B and 2B of the Periodic Table.

3. A process for preparing the crystalline zeolite of claim 1 where M is Na and n is 1, which comprises:

(a) preparing a reaction mixture comprising water, a source of silica, a source of alumina and NaOH, said reaction mixture having a composition, in terms of mole ratios of oxides, within the following ranges:

| | |
|---|---|
| $Na_2O:Al_2O_3$ | 1.0 to 6.0 |
| $SiO_2$:(Al,Cr,Fe)$_2O_3$ | 5 to 15 |
| $H_2O$:(Al,Cr,Fe)$_2O_3$ | 75 to 250 |

but in which Fe can be absent; and

(b) maintaining the reaction mixture at between about 50°C and 300°C under autogeneous pressure for a sufficient period of time to form crystals of the zeolite.

4. The process of claim 3 wherein the source of silica is sodium silicate or colloidal silica.

5. The process of claim 3 wherein the reaction mixture of step 3(b) is maintained at room temperature for a period greater than one day before reacting at 50°C-300°C under autogeneous pressure.

6. The use of a synthetic zeolite claimed in claim 1 or claim 2, or the product of the process claimed in any one of claims 3 to 5, as a catalyst in a hydrocarbon(s) conversion process or a Fischer-Tropsch synthesis.

Figure
X-ray diffraction spectra: ECR-26

**European Patent Office**

# EUROPEAN SEARCH REPORT

Application Number

EP 93 30 7534

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 013 630 (MOBIL OIL CORP.)<br>--- | | C01B33/34<br>B01J29/04 |
| A | DE-A-23 34 920 (BASF AG)<br>--- | | |
| A | DD-A-288 364 (VEB LEUNA-WERKE "WALTER ULBRICHT")<br>--- | | |
| A | US-A-4 061 717 (G. T. KERR ET AL.)<br>----- | | |
| | | | **TECHNICAL FIELDS SEARCHED** (Int.Cl.5)<br><br>C01B<br>B01J |

The present search report has been drawn up for all claims

| Place of search | Date of completion of the search | Examiner |
|---|---|---|
| THE HAGUE | 14 December 1993 | Devisme, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)